(19) Europäisches Patentamt
European Patent Office
Office européen des brevets

(11) **EP 1 926 204 A2**

(12) # EUROPEAN PATENT APPLICATION

(43) Date of publication:
**28.05.2008 Bulletin 2008/22**

(51) Int Cl.:
***H02P 7/24*** (2006.01)

(21) Application number: **07118456.8**

(22) Date of filing: **15.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **10.11.2006 KR 20060111274**

(71) Applicant: **SAMSUNG ELECTRONICS CO., LTD. Suwon-si, Gyeonggi-do (KR)**
Designated Contracting States:
**DE FR GB NL**

(72) Inventor: **Kim, Tae Young Suwon-si (KR)**

(74) Representative: **Waddington, Richard Appleyard Lees, 15 Clare Road Halifax HX1 2HY (GB)**

(54) **Control apparatus using speed estimation for dc motor in image forming apparatus and method thereof**

(57) A control apparatus for an image forming apparatus to control a DC motor at low speed using a low resolution encoder (90) and a method thereof. If the encoder (90) does not generate any pulses during a controlling period, the control apparatus estimates the speed of the DC motor using a formula model related to a plant in which an output speed of the direct current motor is varied according to an input voltage and a ripple model (44) to estimate the speed of the direct current motor due to a load ripple caused by a gear driven by the direct current motor. The control apparatus avoids additional costs associated with high resolution encoders and strongly resists variation of load and has an excellent control performance.

FIG.2

**EP 1 926 204 A2**

**Description**

BACKGROUND OF THE INVENTION

1. Field of the Invention

The present invention relates to a motor controlling apparatus of an image forming apparatus and a method thereof, and more particularly, to an apparatus to control a direct current motor at low speed using a low resolution encoder and a method thereof.

2. Description of the Related Art

An image forming apparatus is an apparatus to print an image signal onto a printable medium. Examples of image forming apparatuses include printers, copying machines, facsimile machines, multifunction devices performing multiple functions (printing, scanning, copying, faxing, etc.), and the like. The image forming apparatus may include a scanner using a direct current (DC) motor as a driving force source in order to acquire an image. The image forming apparatus controls the movement of an image sensor to take a photograph of the image based on the operation of the DC motor.

In a system to control a DC motor, the speed of the DC motor is controlled according to the difference between a reference speed and a measured speed of the DC motor. Measuring the speed of the DC motor is carried out based on pulses of an encoder, which are generated during the rotation of the DC motor. However, when the DC motor rotates at a considerably low speed, the pulses of the encoder may not be detected within a sampling period, and due to this, the pulse period of the encoder is not detected until a next pulse is inputted. As a result, speed data may not be updated.

Japanese Unexamined Patent Application Publication No. Hei 7-015990 discloses a method of estimating a speed of a motor after assuming a motor is rotating at a speed lower than a previous speed or being stopped when information about the speed is not inputted. A shortcoming of this method is that a difference between the estimated speed and an actually measured speed is increased when the previous voltage applied to drive the motor is increased or a load ripple is generated by a gear transmitting the driving force of the motor.

Although a high resolution encoder can provide the speed information when driving the motor at low speed, high resolution encoders are more expensive, increasing the cost of the image forming apparatus.

SUMMARY OF THE INVENTION

The present invention has been made in view of the above-mentioned problems, and an object of the invention is to provide a motor controlling apparatus of an image forming apparatus for controlling a direct current motor stably and reliably at low speed without a low resolution encoder and a method thereof.

According to the present invention there is provided an apparatus and method as set forth in the appended claims. Other features of the invention will be apparent from the dependent claims, and the description which follows.

According to an aspect of the present invention, a control apparatus for an image forming apparatus comprising an image device to take a photograph of an image, a moving unit in which the image device is installed, and a direct current motor to move the moving unit, the control apparatus controls the direct current motor and comprises: a speed sensor to output pulses corresponding to a speed of the direct current motor; a speed estimating unit to determine a necessity to estimate the speed of the direct current motor, and to estimate the speed of the direct current motor according to speed information measured by the speed sensor when the speed estimating unit determines a need for the estimation of the speed of the direct current motor; and a motor driving unit to drive the direct current motor based on the speed of the direct current motor estimated by the speed estimating unit.

Preferably, the speed sensor is an encoder.

Preferably, the speed estimating unit includes: a speed measuring unit to measure the speed and a position of the direct current motor according to the pulses of the speed sensor and to update and store information about the estimated speed and the position of the direct current motor for every controlling period; a controller to provide a control variable and a gain for the estimation of the speed of the direct current motor; a speed estimating device to estimate the speed of the direct current motor using the control variable provided by the controller and the speed and the position of the direct current motor provided by the speed measuring unit; and a speed controller to adjust the speed estimated by the speed estimating device using the gain provided by the controller.

Preferably, the speed estimating device includes: a plant model to estimate the speed of the direct current motor using a formula model related to a plant of a controlling object in which an output speed is varied according to an input voltage; a ripple model to estimate the speed of the direct current model using a formula model due to a load ripple caused when driving the direct current motor; and an adder to add the speed of the direct current motor estimated by the plant model and the speed of the direct current motor by the ripple model to obtain the estimated speed of the direct current motor outputted by the speed estimating device.

Preferably, the plant model uses the following formula to estimate the speed of the direct current motor:

$$y(n+1) = (\Delta T / T) * K * r(n) + (1 - (\Delta T / T)) * y(n)$$

In the formula, $y(n+1)$ is the estimated speed of the direct current motor, $r(n)$ is a previous voltage applied to the direct current motor, $y(n)$ is a previous speed of the direct current motor, T is a time constant until an output speed of the direct current motor reaches 63 % of a reference speed, $\Delta T$ is increase of the time constant, and K is a direct current gain with respect to an input and an output of the control of the direct current motor.

Preferably, the ripple model uses the following formula to estimate the speed of the direct current motor:

$$\text{estimated speed of ripple} = (A + B * r(n)) * \sin(\text{previous position of ripple peak} +$$

$$\text{position of ripple peak} - \pi)$$

In the formula, A and B are constants indicating a magnitude of the load ripple and the position of the ripple peak is a value corresponding to an initial position of the ripple peak.

Preferably, the control apparatus further includes a switch to selectively connect an output of the speed measuring unit to one of the speed estimating device and the speed controller, and the speed measuring unit connects the output of the speed measuring unit to the speed estimating device when the pulses of the speed sensor are not generated within the controlling periods, and applies a switching signal for connecting the output of the speed measuring unit to the speed controller to the switch when the pulses of the speed sensor are generated within the controlling periods.

According to another aspect of the present invention, a control apparatus for an image forming apparatus is provided comprising an image device to take a photograph of an image, a moving unit in which the image device is installed, and a direct current motor to move the moving unit, to the control apparatus controlling the direct current motor, and comprising: an encoder to output pulses corresponding to a speed of the direct current motor; a speed measuring unit to measure the speed and a position of the direct current motor according to the pulses of the encoder generated within controlling periods and to provide information about a previous speed and a previous position of the direct current motor that is required to estimate the speed of the direct current motor, when the speed and the position of the direct current motor are 0 (zero) as a result of the measurement according to the pulses; a controller to a control variable and a gain for the estimation of the speed of the direct current motor based on the pulses of the encoder; a speed estimating unit to apply the control variable provided by the controller, and the previous speed, the previous position, and a previous voltage of the direct current motor provided by the speed measuring unit to a formula model to estimate the speed of the direct current motor; a speed controller to adjust the speed of the direct current motor estimated by the speed estimating unit using the gain provided by the controller; and a motor driving unit to drive the direct current motor based on a motor driving voltage adjusted by the speed controller.

Preferably, the speed estimating unit adds a speed of the direct current motor, estimated using a formula by adding a speed of the direct current estimated using a formula model with respect to a plant of a controlling object and a speed of the direct current motor estimated using a formula model with respect to the load ripple, to estimate the speed of the direct current motor.

According to another aspect of the present invention, a method of controlling a direct current motor of an image forming apparatus, including an image device to take a photograph of an image, a moving unit in which the image device is installed, and the direct current motor to move the moving unit, the method comprising: measuring a speed and a position of the direct current motor according to pulses corresponding to the speed of the direct current motor; estimating the speed of the direct current motor according to a formula model when the pulses are not generated within controlling periods; outputting a motor driving voltage adjusted using a gain and a difference between the estimated speed of the direct current motor and a reference speed; outputting a motor driving voltage adjusted using the measured speed of the direct current motor and the reference speed when the pulses are generated within the controlling periods; and controlling the speed of the direct current motor based on the outputted motor driving voltage.

Preferably, the estimating includes estimating a first estimated speed of the direct current motor using a formula model due to a plant of a controlling object in which an output speed is varied according to an input voltage; estimating a second estimated speed of the direct current motor using a formula model due to a load ripple caused when driving the direct current motor; and adding the first estimated speed and the second estimated speed.

Additional aspects and/or advantages of the invention will be set forth in part in the description which follows and, in part, will be obvious from the description, or may be learned by practice of the invention.

BRIEF DESCRIPTION OF THE DRAWINGS

These and/or other aspects and advantages of the invention will become apparent and more readily appreciated from the following description of the embodiments, taken in conjunction with the accompanying drawings in which:

FIG. 1 is a view schematically illustrating a structure of reciprocating a moving unit, in which an image device to acquire an image uses a direct current motor;
FIG. 2 is a block diagram illustrating a motor controlling apparatus according to an embodiment of the present invention;
FIG. 3 is a detail view illustrating a speed estimating unit shown in FIG. 2 according to an embodiment of the present invention;
FIG. 4 is a graph illustrating a time constant when an output speed is varied with respect to an input voltage of a direct current motor;
FIG. 5 is a flowchart illustrating a method of measuring a position of a ripple peak in order to design a motor controlling apparatus according to an embodiment of the present invention;
FIG. 6 is a graph illustrating a motor speed containing a speed ripple of sinusoidal waves when controlling a direct current motor at low speed;
FIG. 7 is a graph illustrating a position of ripple peak of a load when plotting the graph in FIG. 6 according to the positional variation;
FIG. 8 is a graph illustrating a difference between a speed estimated in the present invention and an encoder speed estimated based on only pulses of the encoder;
FIG. 9A is a graph illustrating a motor speed when the direct current motor is controlled at low speed by estimating the motor speed according to an embodiment of the present invention; and
FIG. 9B is a graph illustrating a motor speed in the conventional technology when the direct current motor is controlled based only on the output pulses of the encoder.

DETAILED DESCRIPTION OF THE EMBODIMENTS

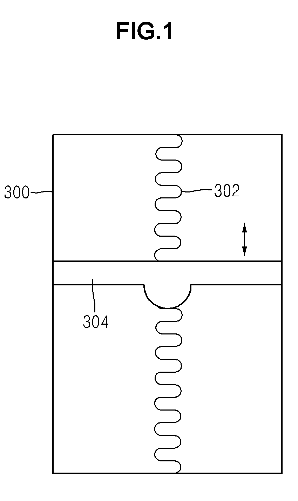

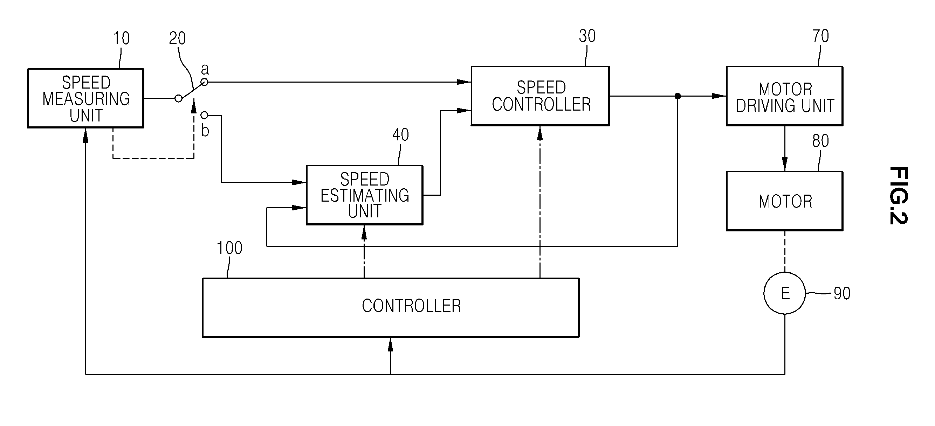

Reference will now be made in detail to the present embodiments of the present invention, examples of which are illustrated in the accompanying drawings, wherein like reference numerals refer to the like elements throughout. The embodiments are described below to explain the present invention by referring to the figures.
Although aspects of the present invention are applicable to any apparatus employing a direct current (DC) motor, use of a DC motor with a contact image scanner as illustrated in FIG. 1 will be described as an example. Referring to FIG. 1, a moving unit 304, including a transfer rail 302 installed in the longitudinal direction of a frame 300 and an image device to take a photograph of an image, acquires the desired image while moving reciprocally along the transfer rail 302. The moving unit 304 is powered by a DC motor.
In order to control a DC motor of an image forming apparatus, a speed of the DC motor is controlled in two ways. First, when the speed of the DC motor is fast and pulses of an encoder are generated within a controlling period, the speed of the DC motor is controlled according to a speed estimated using only an output of the encoder. Second, even when the speed of the DC motor is very slow and the pulses of the encoder are not generated within the controlling period, the speed of the DC motor is controlled according to a motor speed estimated using the output of the encoder and a formula model. According to other aspects of the invention, any speed sensor may be used to measure the speed of the DC motor.
As illustrated in FIG. 2, the encoder 90, provided to measure the speed of the DC motor 80, is inexpensive, has a low resolution, and might not generate pulses when driving the DC motor at low speeds. A speed measuring unit 10 receives the pulses from the encoder 90 to measure the speed and a position (a traveling distance) of the DC motor. The more encoder pulses within the controlling period, the more the speed and the position of the DC motor are increased. The speed measuring unit 10 includes a register (not shown) to store and renew the speed and position of the DC motor periodically. The register provides previous speed and position of the DC motor to a speed estimating unit 40 every period.
A first switch 20 is connected to an output side of the speed measuring unit 10. The first switch 20 selectively contacts one of a first contact a and a second contact b. The contacting operation of the first switch 20 is carried out by a switching signal of the speed measuring unit 10. When the encoder pulses are generated within the controlling period, the first switch 20 contacts the first contact a according to the switching signal of the speed measuring unit 10. When the encoder pulses are not generated within the controlling period, the first switch 20 contacts the second contact b according to the switching signal of the speed measuring unit 10.
When the first switch 20 contacts the first contact a, a speed controller 30 adjusts a speed difference signal and outputs a motor driving voltage to drive the DC motor to a motor driving unit 70 according to the adjustment. The speed difference signal corresponds to a difference between a motor speed measured by the speed measuring unit 10 and a reference speed set by a user using a gain to be provided from a controller 100.

When the first switch 20 contacts the second contact b, the speed estimating unit 40 estimates the motor speed using the previous speed and the previous position of the DC motor, the driving voltage of the DC motor outputted from the speed controller 30, and a control variable provided from the controller 100. The speed estimating unit provides the estimated speed signal to the speed controller 30. The driving voltage outputted from the speed controller 30 may be a previous voltage of the DC motor. When the estimated speed signal is inputted through the speed estimating unit 40, the speed controller 30 adjusts the gain of the speed difference signal corresponding to the difference between the estimated speed signal and the reference speed set by the user and outputs the driving voltage of the DC motor in which the gain is adjusted.

The motor driving unit 70 drives the DC motor 80 in response to the driving voltage of the DC motor received through the speed controller 30. The encoder pulses outputted from the encoder 90 are provided to the controller 100 and the speed measuring unit 10 when driving the DC motor 80.

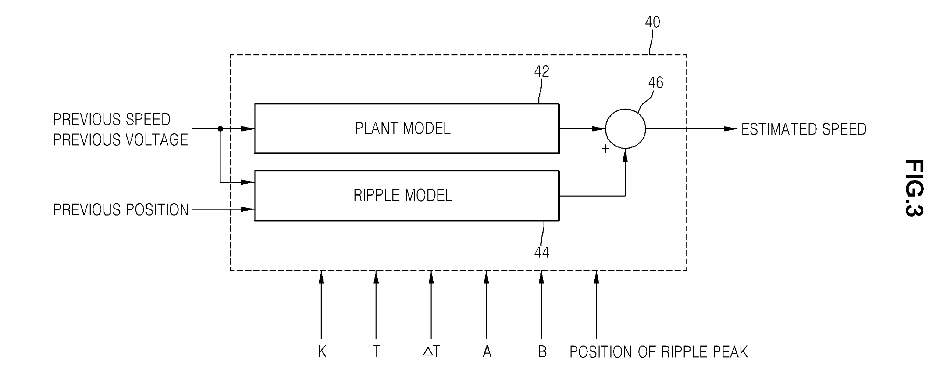

Operation of the speed estimating unit to estimate the speed of the DC motor based on the output information of the encoder will be described. The speed estimating unit 40, as illustrated in FIG. 3, includes a plant model 42, a ripple model 44, and an adder 46. The plant model 42 estimates the speed of the DC motor using a formula model related to a plant in which an output speed is varied according to an input voltage. The ripple model 44 estimates the speed of the DC motor due to a load ripple caused by a gear driven by the DC motor and by the motor gears. The adder 46 adds the estimated speed from the plant model 42 and the estimated speed from the ripple model 44 to provide the speed controller 30.

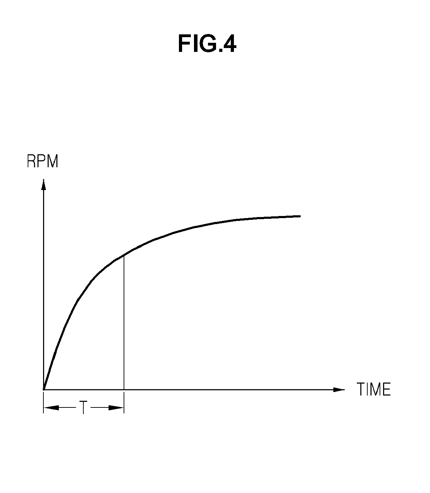

The speed estimating unit 40 receives a required control variable, namely, information about K, T, $\Delta$T, A, B, and a position of a ripple peak from the controller 100. As illustrated in FIG. 4, T is a time constant, the time until the output speed reaches 63 % of a desired reference speed. $\Delta$T is the increase of the time constant. K is a DC gain of the output speed with respect to an input voltage of a system. A and B are constants representing a magnitude of the ripple, and the position of the ripple peak is a control variable to be applied to the ripple model 44.

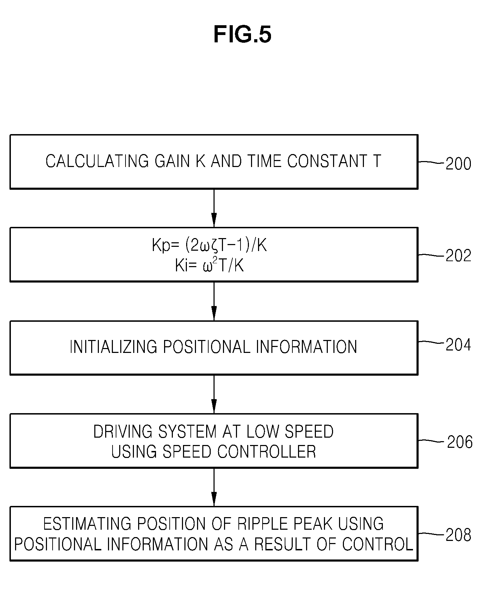

These control variables are obtained from experiments, and in this embodiment, the controller 100 is designed to provide them. FIG. 5 illustrates an experiment to obtain the position of the ripple peak. First, a motor controlling system is implemented by an open loop to estimate the gain K and the time constant T according to the input voltage of the DC motor (200). Next, the gains Kp and Ki to be applied to the load ripple are estimated by the following formula 1 using a known pole placement method (202).

## Formula 1

$$Kp = ((2\omega\zeta) - 1) / K, \quad Kir = (\omega 2T) / K$$

Here, and w are design variables.

Then, the position of the DC motor is initialized (204). The initialization of the motor position may correspond to a starting position of an object moved by the DC motor. If a low resolution encoder does not generate pulses within the controlling period, the DC motor is controlled by the speed controller at low speed. The speed of the DC motor is controlled by a general method of controlling the speed of the DC motor according to the difference between the reference speed and the measured speed (206). After that, according to a result of controlling the DC motor at low speed, the position of the ripple peak is estimated (208). The estimation of the position of the ripple peak will be described in detail.

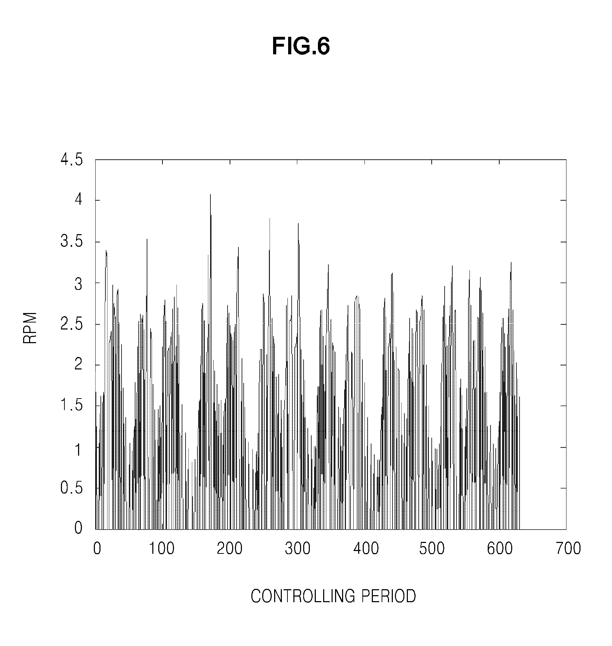

When controlling the DC motor at low speed, the motor speed is represented in the graph of FIG. 6, where the magnitude of the motor speed varies periodically and contains a sinusoidal speed ripple due to influence from the gear transmitting the cogging and from the driving force of the DC motor.

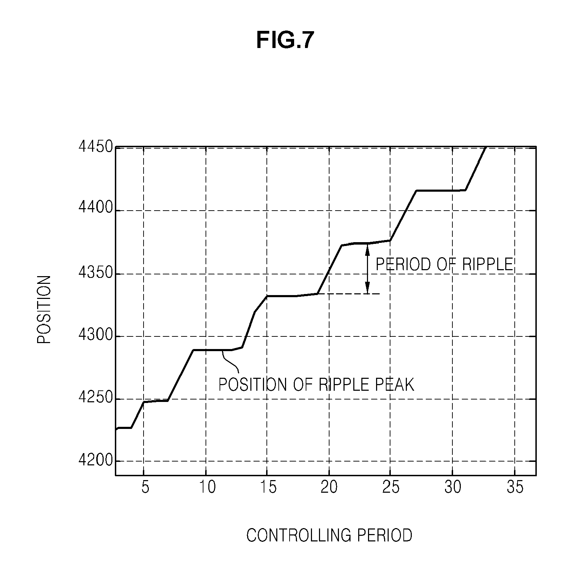

When the controlled result is plotted according to the positional variation, a graph such as that shown in FIG. 7 is obtained. From the graph, the positions of the load ripple peaks are similar for every ripple period, and magnitudes of the positions of the load ripple peaks are increased for every ripple period step by step.

A formula model applied to the plant model 42 of the speed estimating unit 40 will be described. First, a formula of the output speed with respect to the input voltage of the DC motor within a Laplace domain is expressed by the following formula 2.

Formula 2

$$Y / R = K / (Ts + 1)$$

$$Y * (Ts + 1) = K * R$$

$$(Y * Ts) + Y = K * R$$

Here, Y is an output speed and R is an input voltage.

If formula 2 is transformed into a discrete domain, let s = (y (n+1) - y (n)) / ΔT. Formula 3 is obtained from this substitution and transformation.

Formula 3

$$T * \{(y (n+1) - y (n)) / \Delta T\} + y (n) = K * r (n)$$

After a further transformation, formula 4 is obtained.

Formula 4

$$(T / \Delta T) * y (n + 1) - (T / \Delta T) * y (n) + y (n) = K * r (n)$$

$$(T / \Delta T) * y (n + 1) = K * r (n) + ((T / \Delta T) - 1) * y (n)$$

$$Y (n + 1) = (\Delta T / T) * K * r (n) + (1 - (\Delta T / T)) * y (n)$$

Here, y (n + 1) is an estimated speed, r (n) is a previous voltage of the DC motor, and y (n) is a previous speed of the DC motor.

The ripple model 44 estimates the speed of the DC motor due to the load ripple according to the following formula 5.

Formula 5

Estimated speed of load ripple = (A + B * r (n)) * sin (previous position of ripple peak + position of ripple peak - π)

Here, A + B * r(n) is the magnitude of the load ripple.

sin (previous position of ripple peak + position of ripple peak - π) is what the previous position is added to a certain position of a ripple peak provided by the controller 100 and is used to apply the increase to the speed estimation, since, as illustrated in FIG. 7 the positions of the ripple peaks are increased by accumulation as the controlling periods are increased.

The adder 46 adds the speed estimated by the plant model 42 and the speed estimated by the ripple model 44 and outputs the added speed.

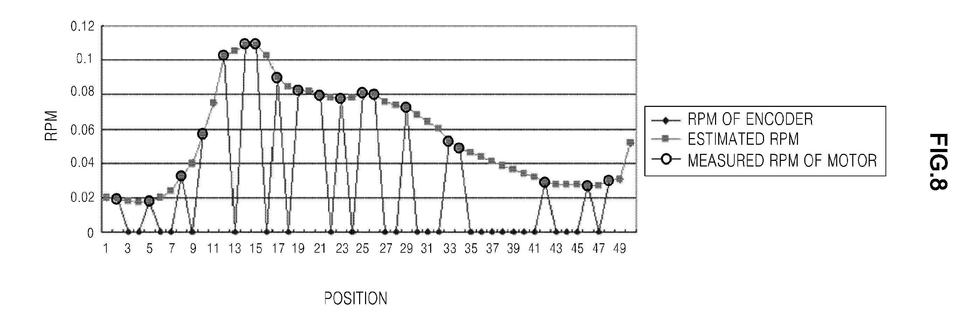

As illustrated in FIG. 8, situations where the estimated speed in the present invention is different from the encoder speed estimated based on only the output of the encoder in the conventional art (indicated by the estimated speed of the DC motor) are exhibited more prominently than situations where the estimated speed in the present invention is equal to the encode speed in the conventional art.

Thus, although it may be misunderstood that the speed does not vary when the speed is based on only the encoder pulses, a more stable and more reliable motor control can be carried out when the DC motor is controlled at low speeds based on the actually estimated speed of the DC motor.

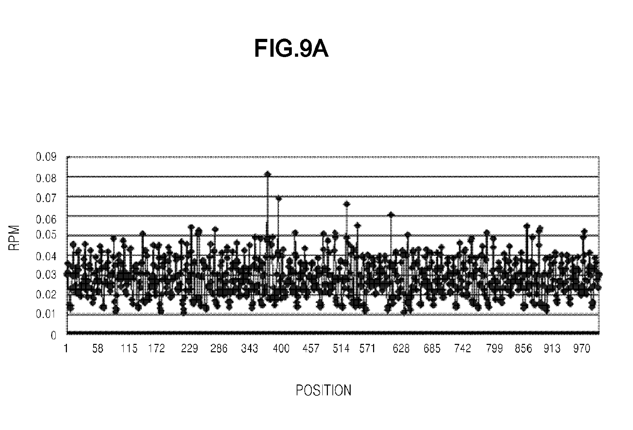

For reference, when the DC motor is controlled at low speeds by estimating the speed of the DC motor according to aspects of the present invention, as illustrated in FIG. 9A, the speed of the DC motor can be varied within a relatively narrow range.

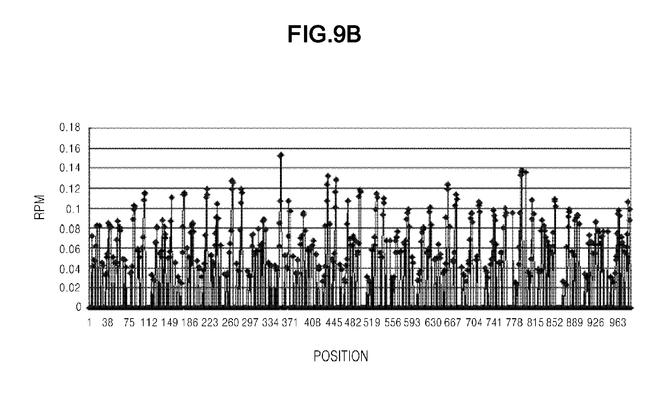

However, when the speed of the DC motor is not estimated, as illustrated by a graph of FIG. 9B, the speed of the DC motor has a wide range of variation so that the control performance of the DC motor deteriorates as much as the variation range.

As described above, according to aspects of the present invention, since the estimated motor speed is used to drive the DC motor at low speed, the speed error can be reduced to achieve stable and reliable control of the DC motor. Since excellent control performance of the DC motor can be guaranteed using even a low resolution encoder, more expensive encoders need not be used. Moreover, since the controller is designed by applying the property of the DC motor due to the load ripple, the control apparatus according to aspects of the present invention strongly resists variation of load and has an excellent control performance.

Although a few embodiments of the present invention have been shown and described, it would be appreciated by those skilled in the art that changes may be made in this embodiment without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A control apparatus for controlling a direct current motor and comprising:

   a speed sensor to output pulses corresponding to a speed of the direct current motor;
   a speed estimating unit to determine a necessity to estimate the speed of the direct current motor, and to estimate the speed of the direct current motor according to the pulses output by the speed sensor when the speed estimating unit determines a need for the estimation of the speed of the direct current motor; and
   a motor driving unit (70) to drive the direct current motor based on the estimated speed of the direct current motor estimated by the speed estimating unit.

2. The control apparatus according to claim 1, wherein the speed sensor comprises an encoder (90).

3. The control apparatus according to claim 1 or claim 2, wherein the control apparatus uses an image forming/obtaining unit to print an image corresponding to image data onto a printable medium or to obtain image data printed on the printable medium.

4. The control apparatus according to claim 3, wherein the image forming/obtaining unit comprises a scan unit to read original data of a manuscript or an inkjet head moving carriage to move in the specification direction head for image forming.

**5.** The control apparatus according to any preceding claim, wherein the speed estimating unit comprises:

a speed measuring unit (10) to measure the speed of and a position of the direct current motor according to the pulses of the speed sensor and to update and store information about the estimated speed and the position of the direct current motor for every controlling period;
a controller (100) to provide a control variable and a gain for the estimation of the speed of the direct current motor;
a speed estimating device (40) to estimate the speed of the direct current motor using the control variable provided by the controller (100) and the speed and the position of the direct current motor provided by the speed measuring unit (10); and
a speed controller (30) to adjust the speed estimated by the speed estimating device (40) using the gain provided by the controller (100).

**6.** The control apparatus according to claim 5, wherein the speed estimating device (40) comprises:

a plant model (42) to estimate the speed of the direct current motor using a formula model related to a plant of a controlling object in which an output speed is varied according to an input voltage;
a ripple model (44) to estimate the speed of the direct current model using a formula model related to a load ripple caused when driving the direct current motor; and
an adder (46) to add the speed of the direct current motor estimated by the plant model (42) and the speed of the direct current motor estimated by the ripple model (44) to obtain the estimated speed of the direct current motor estimated by the speed sensing device.

**7.** The control apparatus according to claim 6, wherein the plant model (42) uses the following formula to estimate the speed of the direct current motor:

$$y\,(n + 1) = (\Delta T / T) * K * r\,(n) + (1 - (\Delta T / T)) * y\,(n);$$

wherein y (n + 1) is the estimated speed of the direct current motor, r (n) is a previous voltage applied to the direct current motor, y (n) is a previous speed of the direct current motor, T is a time constant until an output speed of the direct current motor reaches 63 % of a reference speed, $\Delta T$ is an increase of the time constant, and K is a direct current gain with respect to an input and an output of the control of the direct current motor.

**8.** The control apparatus according to claim 6, wherein the ripple model (44) uses the following formula to estimate the speed of the direct current motor:

estimated speed of the direct current motor due to load ripple = (A + B * r (n)) * sin (previous position of ripple peak + position of ripple peak - $\pi$);
wherein A and B are constants indicating a magnitude of the load ripple and the position of the ripple peak is a value corresponding to an initial position of the ripple peak.

**9.** The control apparatus according to any one of claims 5 to 8, further comprising a switch to selectively connect an output of the speed measuring unit (10) to one of the speed estimating device (40) and the speed controller (30).

**10.** The control apparatus according to claim 9, wherein the speed measuring unit (10) connects the output of the speed measuring unit (10) to the speed estimating device (40) when the pulses of the speed sensor are not generated within the controlling periods and applies a switching signal to connect the output of the speed measuring unit (10) to the speed controller (30) when the pulses of the speed sensor are generated within the controlling periods.

**11.** A control apparatus for an image forming apparatus, the image forming apparatus comprising an image device to take a photograph of an image, a moving unit in which the image device is installed, and a direct current motor to move the moving unit, the control apparatus controlling the direct current motor and comprising:

an encoder (90) to output pulses corresponding to a speed of the direct current motor;
a speed measuring unit (10) to measure the speed and a position of the direct current motor according to the pulses of the encoder (90) generated within controlling periods and to provide information about a previous speed and a previous position of the direct current motor required to estimate the speed of the direct current motor, when the speed and the position of the direct current motor are 0 (zero) as a result of the measurement according to the pulses;

a controller (100) to provide a control variable and a gain for the estimation of the speed of the direct current motor, based on the output pulses of the encoder (90);

a speed estimating unit (40) to apply the control variable provided by the controller (100) and the previous speed, the previous position, and a previous voltage of the direct current motor provided by the speed measuring unit (10) to a formula model to estimate the speed of the direct current motor;

a speed controller (30) to adjust the speed and the voltage of the direct current motor estimated by the speed estimating unit (40) using the gain provided by the controller (100); and

a motor driving unit (70) to drive the direct current motor based on the motor driving voltage adjusted by the speed controller (30).

12. The control apparatus of an image forming apparatus according to claim 11, wherein the speed estimating unit (40) estimates the speed of the direct current motor by adding a speed of the direct current motor estimated using a formula model with respect to a plant of a controlling object and a speed of the direct current motor estimated using a formula model with respect to the load ripple.

13. A method of controlling a direct current motor of an image forming apparatus, comprising an image device to take a photograph of an image, a moving unit in which the image device is installed, and the direct current motor to move the moving unit, the method comprising:

measuring a speed and a position of the direct current motor according to pulses corresponding to the speed of the direct current motor;

estimating the speed of the direct current motor according to a formula model when the pulses are not generated within controlling periods;

outputting a motor driving voltage adjusted using a gain and a difference between the estimated speed of the direct current motor and a reference speed;

outputting the motor driving voltage adjusted using the measured speed of the direct current motor and the reference speed when the pulses are generated within the controlling periods; and

controlling the speed of the direct current motor based on the outputted motor driving voltage.

14. The method according to claim 13, wherein the estimating comprises:

estimating a first estimated speed of the direct current motor using a formula model due to a plant of a controlling object in which an output speed is varied according to an input voltage;

estimating a second estimated speed of the direct current motor using a formula model due to a load ripple caused when driving the direct current motor; and

adding the first estimated speed and the second estimated speed.

15. An image forming and/or obtaining apparatus comprising:

an image forming/obtaining unit to print an image corresponding to image data onto a printable medium or to obtain image data corresponding to an image printed on the printable medium; and

an image forming unit controller (100) to control the image forming/obtaining unit, the image forming unit controller (100) having a direct current motor to drive the image forming/obtaining unit, an encoder (90) to output pulses corresponding to a speed of the direct current motor, a speed measuring unit (10) to measure the speed and a position of the direct current motor based on the pulses and to provide information about a previous speed and a previous position of the direct current motor, a controller (100) to provide a control variable and a gain for estimating the speed of the direct current motor, a speed estimating unit (40) to estimate the speed of the direct current motor using a formula model, the formula model applying the control variable, the previous speed of the direct current motor, the previous position of the direct current motor, and a previous voltage of the direct current motor, a speed controller (30) to adjust the estimated speed and voltage of the direct current motor using the gain provided by the controller (100), and a motor driving unit (70) to drive the direct current motor based on the motor driving voltage adjusted by the speed controller (30).

16. A controller to control a direct current motor with stability and reliability, the controller comprising:

a speed estimating unit to estimate the speed of the direct current motor using a formula model related to a plant in which an output speed of the direct current motor is varied according to an input voltage and a ripple model (44) to estimate the speed of the direct current motor due to a load ripple caused by a gear driven by the direct current motor; and

a motor driving unit (70) to drive the direct current motor based on the estimated speed of the direct current motor estimated by the speed estimating unit (40).

17. The controller according to claim 16, wherein the speed estimating unit comprises:

a speed measuring unit (10) to measure the speed of and a position of the direct current motor according to pulses detected by a speed sensor during a controlling period and to update and store information about the estimated speed and the position of the direct current motor for every controlling period;

a speed estimating unit controller to provide a control variable and a gain for the estimation of the speed of the direct current motor;

a speed estimating device (40) to estimate the speed of the direct current motor using the control variable provided by the speed estimating unit controller and the speed and the position of the direct current motor provided by the speed measuring unit (10); and

a speed controller (30) to adjust the speed estimated by the speed estimating device (40) using the gain provided by the controller (100).

18. The controller according to claim 17, wherein the speed estimating device (40) comprises:

a plant model (42) to estimate the speed of the direct current motor using a formula model related to a plant of a controlling object in which an output speed is varied according to an input voltage;

a ripple model (44) to estimate the speed of the direct current model using a formula model related to a load ripple caused when driving the direct current motor; and

an adder (46) to add the speed of the direct current motor estimated by the plant model (42) and the speed of the direct current motor estimated by the ripple model (44) to obtain the estimated speed of the direct current motor estimated by the speed sensing device.

19. The controller according to claim 17 or claim 18, further comprising a switch to selectively connect an output of the speed measuring unit (10) to one of the speed estimating device (40) and the speed controller (30).

20. The controller according to claim 19, wherein the speed measuring unit (10) connects the output of the speed measuring unit (10) to the speed estimating device (40) when the pulses of the direct current motor are not generated within the controlling periods and applies a switching signal to connect the output of the speed measuring unit (10) to the speed controller (30) when the pulses are generated within the controlling periods.

21. The controller according to any one of claims 18 to 20, wherein the plant model (42) uses the following formula to estimate the speed of the direct current motor:

$$y\,(n + 1) = (\Delta T\,/\,T)\,{}^{*}\,K\,{}^{*}\,r\,(n) + (1 - (\Delta T\,/\,T))\,{}^{*}\,y\,(n);$$

wherein y (n + 1) is the estimated speed of the direct current motor, r (n) is a previous voltage applied to the direct current motor, y (n) is a previous speed of the direct current motor, T is a time constant until an output speed of the direct current motor reaches 63 % of a reference speed, $\Delta T$ is an increase of the time constant, and K is a direct current gain with respect to an input and an output of the control of the direct current motor.

22. The controller according to any one of claims 18 to 21, wherein the ripple model (44) uses the following formula to estimate the speed of the direct current motor:

estimated speed of the direct current motor due to load ripple = (A + B * r (n)) * sin (previous position of ripple peak + position of ripple peak - $\pi$);

wherein A and B are constants indicating a magnitude of the load ripple and the position of the ripple peak is a value corresponding to an initial position of the ripple peak.

# FIG.1

# FIG.2

FIG.3

PREVIOUS SPEED
PREVIOUS VOLTAGE

PREVIOUS POSITION

PLANT MODEL

RIPPLE MODEL

ESTIMATED SPEED

40

42

46

44

+

K    T    ΔT    A    B    POSITION OF RIPPLE PEAK

# FIG.4

EP 1 926 204 A2

# FIG.5

CALCULATING GAIN K AND TIME CONSTANT T —200

$Kp= (2\omega\zeta T-1)/K$
$Ki= \omega^2 T/K$ —202

INITIALIZING POSITIONAL INFORMATION —204

DRIVING SYSTEM AT LOW SPEED
USING SPEED CONTROLLER —206

ESTIMATING POSITION OF RIPPLE PEAK USING
POSITIONAL INFORMATION AS A RESULT OF CONTROL —208

# FIG.6

CONTROLLING PERIOD

# FIG.7

# FIG.8

# FIG.9A

# FIG.9B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI7015990 A